# EUROPEAN PATENT APPLICATION

(11) **EP 2 930 914 A1**
(43) Date of publication of application: **14.10.2015**
(21) Application number: 15162658.7
(22) Date of filing: 07.04.2015
(51) Int. Cl.: H04M 1/2745, G06F 17/30

(54) **METHOD FOR MANAGING CONTACT INFORMATION AND ELECTRONIC DEVICE IMPLEMENTING THE SAME**

(30) Priority: 07.04.2014 KR 20140041188
(71) Applicant: Samsung Electronics Co., Ltd, Gyeonggi-do 443-742 (KR)
(72) Inventor: Kim, Geonsoon, Gyeonggi-do 443-742 (KR); Yeom, Donghyun, Gyeonggi-do 443-742 (KR); Huh, Sangmin, Gyeonggi-do 443-742 (KR); Hwang, Minkyung, Gyeonggi-do 443-742 (KR)
(74) Representative: Birchenough, Lewis

(57) **Abstract**

A method for managing contact information in an electronic device according to certain embodiments of the present disclosure includes: receiving update information of contact information from one of electronic devices connected to the electronic device, updating the contact information based on the received update information, identifying an electronic device set the updated contact information as a shared object, and transmitting at least one portion of the update information to the electronic device set the contact information as a shared object.

## Description

### TECHNICAL FIELD

Various embodiments of the present disclosure relate to a method for managing contact information and an electronic device implementing the same.

### BACKGROUND

Contact information stored in a memory of electronic device can be managed. For example, the contact information includes an image, phone number, email address, or other information related to the contact information. When a user adds new contact information in a phonebook or modifies existing contact information, the user directly inputs and stores the contact information by using the electronic device. When replacing the electronic device, the use can copy or move the contact information stored in the existing electronic device to a new electronic device. The user inputs the contact information one by one; however, the contact information of the existing electronic device can be copied or moved to the new electronic device conveniently and quickly by using a backup function. Further, the user can use a contact information storage function of a server. Such a computer operation can be performed through a cloud computing technology. The cloud computing technology stores user contents such as a media file (such as a movie, photo, and music), document, address book in a server (for example, cloud server), and the user contents can be downloaded by using an electronic device communicable with a personal computer or a server.

The contact information can be backed up and restored by using an account registered in the electronic device, and thereby the user can directly register or modify the contact information when the contact information to be modified or registered as a quiescent list (for example, spam phone number) is obtained. A list containing contact information is grouped in a company, family, or friend. Contact information in an identical group can be shared between group members. A user has to individually inform related members by sending changed contact information with a text message or by making a phone call whenever contact information is changed. However, an update of contact information may not be applied exactly if a receiver doesn't update the changed contact information according to the update notice. 'Smishing' is a complex word of SMS (Short Message Service) and phishing. If a text message including a website link is sent to an electronic device and a user clicks the corresponding link in the electronic device, a hacking program could be installed in the electronic device by using a hacking technique. In this case, the user has to inform each member by sending a message or making a phone call so that the members can register the contact information corresponding to the spam message in a quiescent list. However, the procedure of individually informing the members in order to register the changed contact information in the quiescent list generates inconvenience and inefficiency in time and expenses. Further, there is a possibility that all the members may not correctly apply the modified information in the electronic device.

### SUMMARY

To address the above-discussed deficiencies, it is a primary object to provide to provide a method for managing contact information and an electronic device implementing the same.

In accordance with an aspect of the present disclosure, a method for managing contact information includes: receiving update information of contact information from one of electronic devices connected to the electronic device, updating the contact information based on the received update information, identifying an electronic device set the updated contact information as a shared object, and transmitting at least one portion of the update information to the electronic device set the contact information as a shared object.

In accordance with another aspect of the present disclosure, an electronic device for managing contact information includes: a communication module configured to transmit update information of contact information to connected electronic devices; a memory configured to store the contact information; and at least one processor configured to receive update information of contact information from one of electronic devices connected to the electronic device, to update the contact information based on the received update information, to identify an electronic device set the updated contact information as a shared object, and to transmit the update information to the electronic device set the contact information as a shared object.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a method for setting and transmitting a common phonebook between an electronic device and a server according to various embodiments of the present disclosure;
FIG. 2 illustrates a configuration of server according to various embodiments of the present disclosure;
FIG. 3 illustrates a method for setting a common area and a non-common area in a common phonebook of a server according to various embodiments of the present disclosure;
FIGS. 4A and 4B illustrate a method for setting contact information to be commonly managed by groups and individuals in an electronic device according to various embodiments of the present disclosure;
FIG. 5 illustrates a method for registering contact information to be shared in an electronic device according to various embodiments of the present disclosure;
FIG. 6 illustrates a method for dividing a common phonebook of a server into a common area and a non-common area according to various embodiments of the present disclosure;
FIG. 7 illustrates a configuration of common phonebook stored in a memory of a server according to various embodiments of the present disclosure;
FIG. 8 illustrates a method for managing updated contact information through a server according to various embodiments of the present disclosure;
FIG. 9 illustrates a procedure of updating a common phonebook through a server according to various embodiments of the present disclosure;
FIG. 10 illustrates a method for updating a common phone book between an electronic device and a server according to various embodiments of the present disclosure;
FIG. 11 illustrates a method for transmitting contact information from an electronic device to a server according various embodiments of the present disclosure;
FIG. 12 illustrates a method for updating contact information received from a server in an electronic device according to various embodiments of the present disclosure;
FIG. 13 illustrates a notice window being output while updating contact information in an electronic device according to various embodiments of the present disclosure;
FIG. 14 illustrates a method for managing a blacklisted phonebook through a server in an electronic device according to various embodiments of the present disclosure; and
FIG. 15 illustrates a method for updating a blacklisted phonebook between an electronic device and a server according to various embodiments of the present disclosure.

### DETAILED DESCRIPTION

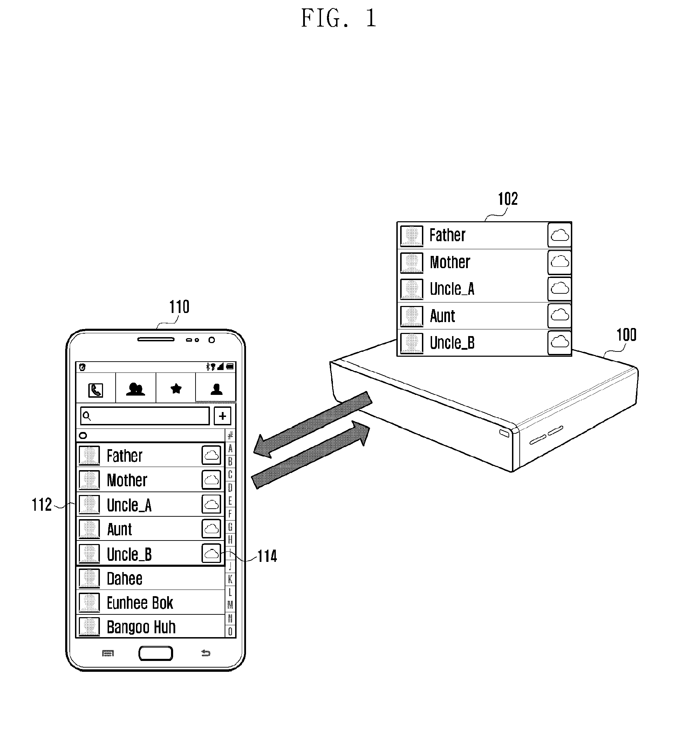

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications systems. Hereinafter, embodiments of the disclosure are described in detail with reference to the accompanying drawings. The same reference symbols are used throughout the drawings to refer to the same or like parts. Detailed descriptions of well-known functions and structures incorporated herein may be omitted to avoid obscuring the subject matter of the disclosure.

For the same reasons, some components in the accompanying drawings are emphasized, omitted, or schematically illustrated, and the size of each component does not fully reflect the actual size. Therefore, the present disclosure is not limited to the relative sizes and distances illustrated in the accompanying drawings.

The expressions "comprise" and "include" used in the present disclosure indicate existence of a correspondingly disclosed function, operation, or component, and is not limited to at least one of an additional function, operation, or component. Further, by the terms "include" and "have" in the present disclosure, it is meant that a characteristic, number, step, operation, element, component, or their combination exists in the disclosure, and therefore it should be understood that the existence or additional possibility of at least one characteristic, number, step, operation, element, component, or their combination is not excluded.

In the detailed description of the present disclosure, an expression "or" includes one of listed words and their combinations. For example, "A or B" can include A, B, or both A and B.

In the detailed description of the present disclosure, expressions such as "first" and "second" can modify various components of the present disclosure but doesn't limit the corresponding components. For example, the above expressions don't limit the order or importance of the corresponding components. The above expressions can be used to distinguish a component from another component. For example, both a first user device and a second user device are the same user devices but indicate separate user devices. For example, within the spirit and scope of the present disclosure, a first component can be called second component and, similarly the second component can be called first component.

When describing that a component is "connected" or "accessed" to another component, the component could be directly connected or accessed to the other component, however it should be understood that a further another component also could exist between them. On the other hand, when it is described that a component is "directly connected" or "directly accessed" to another component, it should be understood that any other component doesn't exist between them.

The terms are merely used to describe a specific embodiment of the present disclosure, and don't limit the scope and spirit of the present disclosure. It is to be understood that the singular forms "a," "an," and "the" include plural referents unless the context dictates otherwise.

Unless the context clearly dictates otherwise, all the terms including a technical or scientific term used in the present disclosure will have the same meaning generally understood by those skilled in the art. It should be understood that terms defined in a generally used dictionary have the same meaning as in a related technical context, and are not interpreted as an abnormal or excessively formal meaning unless clearly dictated in the present disclosure.

An electronic device according to the present disclosure is a device including a communication function. The electronic device according to the present disclosure includes a communication function. For example, the electronic device is a smartphone, tablet Personal Computer (PC), mobile phone, video phone, e-book reader, desktop PC, laptop PC, netbook computer, PDA (Personal Digital Assistant), PMP (Portable Multimedia Player), MP3 player, mobile medical appliance, electronic bracelet, electronic necklace, electronic appcessory, camera, wearable device, electronic clock, wrist watch, home appliance (for example; refrigerator, air conditioner, vacuum cleaner, oven, microwave oven, washing machine, and air cleaner), artificial intelligence robot, TV, DVD (Digital Video Disk) player, audio player, various medical appliances (for example; MRA (Magnetic Resonance Angiography), MRI (Magnetic Resonance Imaging), CT (Computed Tomography), movie camera, and ultrasonic instrument), navigation device, GPS (Global Positioning System) receiver, EDR (Event Data Recorder), FDR (Flight Data Recorder), set-top box, TV box (For example; SAMSUNG HOMESYNC), electronic dictionary, automobile infotainment device, electronic equipment for ship (for example; navigation equipment for ship and gyro compass), avionics, security equipment, electronic clothing, electronic key, camcorder, game console, HMD (Head-Mounted Display), flat panel display device, electronic picture frame, electronic album, portion of furniture or a building or structure including a communication function, electronic board, electronic signature receiving device, projector, and their combinations. It be understood to those skilled in the art that the electronic device according to the present disclosure is not limited to the above listed equipment.

Certain embodiments of the present disclosure provides a method for managing common phonebook by setting the common phonebook between an electronic device having a communication function and a server. In certain embodiments, the server includes a personal home cloud such as a NAS (Network Access Server) and HOMESYNC. Information related to contact information is included in a common phonebook shared by the electronic device and server. For example, the information related to the contact information is information such as an image, phone number, email address, or other information. The information related to the contact information includes an image, phone number, email address, or other information. "Update of contact information" described in certain embodiments of the present disclosure means addition and modification of the contact information. Further, "phone number" described in the present disclosure means "contact information" in a wider range.

In the detailed description of the present disclosure, synchronization between a server and an electronic device is called "first synchronization," and synchronization between electronic devices through the server is called "second synchronization." The present disclosure relates to a method for sharing contact information set as a common phonebook through the first synchronization between the electronic device and server, and an electronic device implementing the same.

FIG. 1 is an example drawing illustrating a method for setting and transmitting a common phonebook between an electronic device and a server according to certain embodiments of the present disclosure.

Referring to FIG. 1, the electronic device 110 sets a common phonebook 112 according to a user's decision. In certain embodiments, the electronic device 110 displays at least one of a sharing icon 114, or a location, size, shape, or color of contact information in a screen in order to distinguish contact information set as the common phonebook 112 and contact information not set as the common phonebook 112. The electronic device 110 and a server 100 are in a synchronized state to share the common phonebook 112, and the synchronization between the electronic device 110 and server 100 is called first synchronization. The synchronization means a state that the electronic device 110 and server 100 are connected to share identical data. The synchronization is a state that common phonebooks 112 in the server 100 and electronic device 110 are maintained in the same condition. The first synchronization between the server 100 and electronic device 110 are identified through a user account (such as a user name or user email address). In order to synchronize the electronic device 110 with the server 100, the user set user information such as a user name and a password through the server 100. In certain embodiments, the user information is stored in the server 100, and is used for identifying an electronic device 110 to be synchronized. The server 100 identifies the electronic device 110 to be synchronized by using user information input through the electronic device 110, and shares phone numbers set as the common phonebook 112 in the electronic device 110. The server 100 and electronic device 110 are in a first synchronization state when the server 100 and electronic device 110 are connected to share specific information. When the server 100 identifies that the electronic device 110 has come into a connection environment of the server 100 (such as a first synchronization state) by detecting location or access point (AP) information, the server 100 and electronic device 110 share data with each other. For example, the server 100 provides the first synchronization between the server 100 and electronic device 110 when the electronic device 110 is located in an information sharing area (for example, home or company). A synchronization state between the electronic device 110 and other electronic devices formed through the server 100 is called second synchronization. For example, the server 100 and electronic device 110 share data through the first synchronization, and the electronic device 110 further share the data with another electronic device through the server 100. Electronic device 110 is synchronized with another electronic device through the second synchronization. In certain embodiments, the electronic device 110 identifies another electronic device to be synchronized according to a user setting. The electronic device 110, according to certain embodiments of the present disclosure, sets a common phonebook 112 according to a user setting and transmits the common phonebook 112 to the server 100 in the first synchronization state. The server 100 receives the common phonebook 112 from the electronic device 110 and stores it in a common phonebook 102 of the server 100. The server 100 transmits the common phonebook 102 to other electronic devices in a first synchronization state. The electronic device 110 shares the common phonebook 102 with other electronic devices through the server 100. The electronic device 110 forms a second synchronization state with other electronic devices.

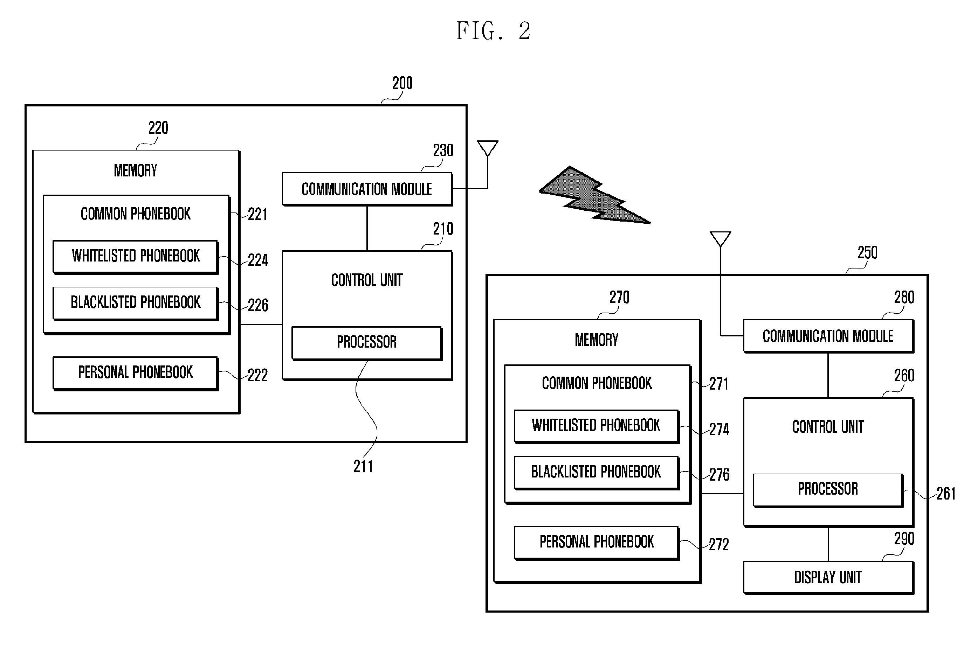

FIG. 2 illustrates a configuration of server according to certain embodiments of the present disclosure. One server 200 and one electronic device 250 are illustrated in FIG. 2; however, the present disclosure is not limited to this. The server 200 is connected to a plurality of electronic devices 250 and exchanges data (such as contact information) with each electronic device.

Referring to FIG. 2, the server 200, according to various embodiments of the present disclosure, is configured with a control unit 210, memory 220, and communication module 230.

The control unit 210 of server 200 includes at least one processor 211. The control unit 210 connects the memory 220 and communication module 230, and controls communications (such as a control message) between the above components. For example, the control unit 210 of server 200 receives data such as a common phonebook 112 from the electronic device 250 having a communication function through the communication module 230 and stores the data in the memory 220. The control unit 210 controls to transmit and receive signals between the communication module 230 and memory 220.

The processor 211 of server 200 integrally manages the received data (such as a common phonebook 112) from the electronic device. The processor 211 sets the common phonebook 221 in a sharable data area of the memory 220 in order to integrally manage the data. In certain embodiments, the common phonebook 221 is divided into a whitelisted phonebook 224 and a blacklisted phonebook 226 (such as a quiescent list). The processor 211 stores contact information received from each electronic device and sets the contact information as a whitelist and a blacklist respectively in the whitelisted phonebook 224 and the blacklisted phonebook 226. The contact information included in the whitelisted phonebook 224 is maintained and managed in the electronic device 250 having a first synchronization state with the server 200. The contact information (such as a quiescent list, spam phone number, and smishing phone number) included in the blacklisted phonebook 226 is blocked or deleted from the electronic device 250 having a first synchronization state with the server 200. Further, the contact information set in a blacklist includes not only the phone number, but also a specific text-based context (such as a spam context). The contact information stored in a phonebook of electronic device may not be divided into a whitelist and a blacklist. The division of the whitelist and blacklist can be virtually divided in order to logically manage the common phonebook 221 in the server 200. The processor 211 manages phone numbers stored in the common phonebook 224 by dividing into a common area and a non-common area. For example, the processor 211 receives a common phonebook of an electronic device A from the electronic device A and a common phonebook of an electronic device B from the electronic device B. The processor 211 manages contact information received from each electronic device and distributes identical contact information in the electronic devices A and B in a common area. When managing an electronic device C, the processor 211 manages the contact information by dividing into a common area of A and B, common area of B and C, common area of A and C, and non-common area. When contact information corresponding to a common area of A, B, and C is modified, the processor 211 transmits the modified contact information to the electronic devices A, B, and C. When contact information corresponding to the common area of A and C is modified, the processor transmits the modified contact information to the electronic devices A and C. When modification of contact information belongs to a common area is identified, the processor 211 identifies electronic devices set the corresponding contact information in the common phonebook and transmits the modified contact information to the corresponding electronic devices. The electronic device received the modified contact information asks a user whether to update contact information or not.

The memory 220 stores commands and data received from the processor 211 of server 200 or from other components such as a communication module. The memory 220 of the server 200 includes a common phonebook 221 and a personal phonebook 222. The common phonebook is divided into a whitelisted phonebook 224 and a blacklisted phonebook 226. The whitelisted phonebook 224 and the blacklisted phonebook 226 are divided logically and may not be distinctively displayed in a screen.

The processor 211 of server 200 receives contact information set as a common phonebook (such as an image, phone number, email address, or other information of contact information) from an electronic device, and stores the contact information in the common phonebook 221 of the memory 220. The processor 211 manages the common phonebook 221 by dividing into a common area and a non-common area based on the contact information received from each electronic device. For example, when a phone number received from the electronic device A and a phone number received from the electronic device B are identical, the processor 211 manages the corresponding phone number by storing in the common area of A and B. When the phone numbers are not identical, the processor 211 manages the common phonebook 221 by dividing a non-common area of A and a non-common area of B. For example, when modification of a phone number stored in the common area of A and B is identified, the processor 211 transmits information related to the modified phone number to the electronic device A and electronic device B. When modification of a phone number stored in a non-common area of A is identified, the processor 211 modifies the corresponding phone number but not transmit information related to the modified phone number to another electronic device. Accordingly, the processor 211 manages the common phonebook by dividing into a common area and a non-common area based on the contact information received from each electronic device

The processor 211 receives contact information registered as a blacklist form each electronic device and store it in the blacklisted phonebook 226 of the memory 220. When new contact information is stored in the blacklisted phonebook 226, the processor 211 transmits the newly stored blacklisted phonebook 226 to the electronic devices synchronized with the server 200.

The processor 211 stores contact information not set in the common phonebook 221 (whitelisted phonebook 224 and blacklisted phonebook 226) in the memory 220 by setting to a personal phonebook 222. The personal phonebook 222 is a phonebook not sharing contact information with other electronic devices.

The communication module 230 includes a Wi-Fi (Wireless-Fidelity), BT (BLUETOOTH), GPS (Global Positioning System), or NFC (Near-Field Communication). The communication module 230 provides a wireless communication function by using a radio frequency. The communication module 230 includes a network interface (such as a LAN card) or modem to connect the server 200 to a network such as Internet, LAN (local area network), WAN (Wide Area Network), telecommunication network, cellular network, satellite network, or POTS (Plain Old Telephone Service). The communication module 230 of the server 200 provides a function for connecting an electronic device to the server 200 in order to transmit and receive data to or from each electronic device.

Referring to FIG. 2, the electronic device 250 according to certain embodiments of the present disclosure is configured with a control unit 260, memory 270, communication module 280, and display unit 290.

The control unit 260 of the electronic device 250 also includes at least one processor 261. The control unit 260 connects the memory 270, communication module 280, and display unit 290, and control communication between the components. For example, the control unit 260 receives data such as a phone number from the server 200 through the communication module 280. The control unit 260 controls the display unit 290 to display a notice window in order to decide an update of the received phone number. When confirmation of an update is identified, the control unit 260 updates the common phonebook 271 in the memory 270. The control unit 260 controls transmission of signals between the memory 270, communication module 280, and display unit 290.

The processor 261 of the electronic device 250 manages the contact information received from the server 200 by storing in the common phonebook 271 of the memory 270. In certain embodiments, the common phonebook 271 is divided into a whitelisted phonebook 274 and a blacklisted phonebook 276 like the common phonebook 221 of the server 200. The whitelisted phonebook 274 is a phonebook maintained and managed by a user, and the blacklisted phonebook 276 is a phonebook in which a spam phone number or smishing phone number is blocked or deleted by the user.

The memory 270 stores commands and data received from the processor 261 or other components, or generated by the processor 261 or other components. The memory 270 is divided into a common phonebook for sharing contact information with the server 200 and a personal phonebook for not sharing contact information with the server 200. Further, the common phonebook is configured with a whitelisted phonebook 274 and a blacklisted phonebook 276.

The processor 261 updates the whitelisted phonebook 274 with the contact information received from the server 200. Further, when contact information (such as quiescent contact information) stored in the blacklisted phonebook 226 is received from the server 200 to the electronic device 250, the processor 261 blocks the contact information by storing in the blacklisted phonebook 276. The processor 261 modifies each phone number configured in the whitelisted phonebook 274, blacklisted phonebook 276, and personal phonebook 272 according to a user setting. The processor 261 moves a phone number stored in the whitelisted phonebook 274 to the blacklisted phonebook 275 according to the user setting.

The communication module 280 includes a Wi-Fi (Wireless-Fidelity), BT (BLUETOOTH), GPS (Global Positioning System), or NFC (Near-Field Communication). The communication module 280 provides a wireless communication function by using a radio frequency. The communication module 280 provides a function of connecting the electronic device 250 to the server 200 in order to transmit or receive data.

The display unit 290 outputs a notice window related to a phone number received from the server 200. A user decides reception of the phone number through the notice window output in the display unit 290. The display unit 290 includes a display panel.

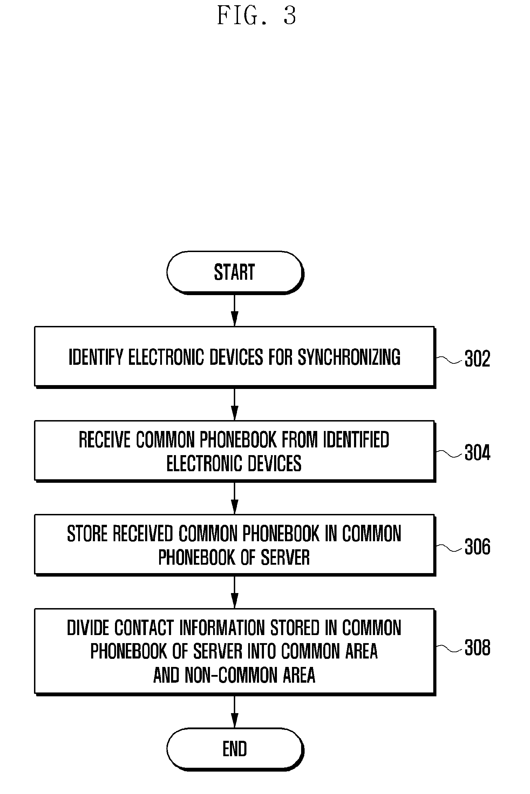

FIG. 3 illustrates a method for setting a common area and a non-common area in a common phonebook of a server according to various embodiments of the present disclosure.

In step 302, the processor 211 of server 200 identifies electronic devices (for example; an electronic device 250) to be synchronized. For example, a user stores user information such as a user name or password in the server 200 to synchronize with an electronic device. When the electronic device 250 is synchronized with the server 200, the processor 211 of server 200 compares the user information (such as a user name or password) input by the user with user information pre-stored in the server 200. For example, when the user name and password are identical to those stored in the server 200, the processor 211 of server 200 identifies the corresponding electronic device 250 as an object for synchronizing. The processor 211 of server 200 identifies an electronic device for synchronizing through the user name and password input by the users and stored in the server 200. When the server 200 and the electronic device 250 are connected to share data each other, the server 200 and the electronic device 250 is synchronized. In certain embodiments, the synchronization is a first synchronization between the electronic device 250 and the server 200.

In step 304, the processor 211 receives common phonebook from the synchronized electronic devices. In step 306, the processor 211 stores the received common phonebook in a common phonebook 221 of the memory 220. In certain embodiments, the common phonebook 221 is divided into a whitelisted phonebook 224 and a blacklisted phonebook 226. The processor 211 stores phone numbers to be maintained and managed according to a user setting in the whitelisted phonebook 224 and phone numbers to be blocked or deleted from the blacklisted phonebook 226 according to the user setting. In step 308, the processor 211 classifies contact information into a common area and a non-common area based on the common phonebooks 221 stored in the electronic devices and the server 200. The processor 211 classifies identical contact information into the common area and non-identical contact information into the non-common area by comparing phonebooks of the electronic devices. The processor 211 effectively manages the contact information both in the common area and non-common area by generating a mapping table based on the common phonebook 221.

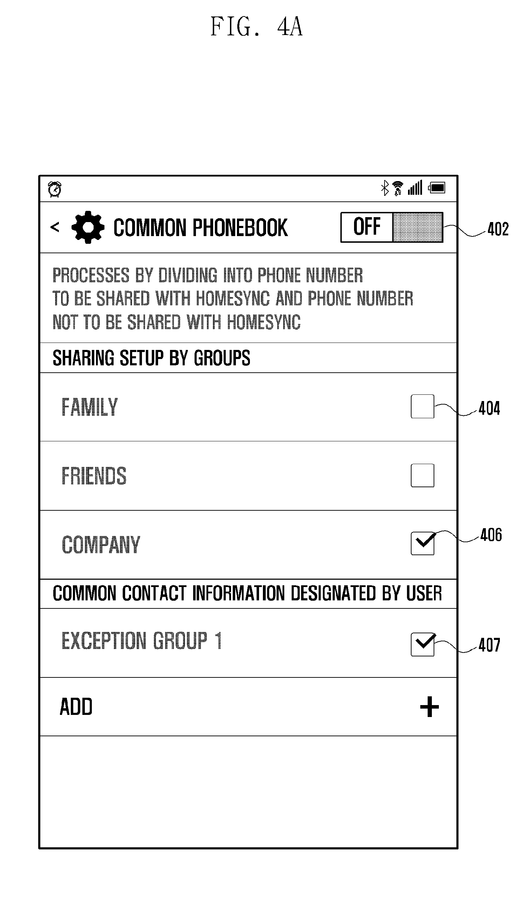

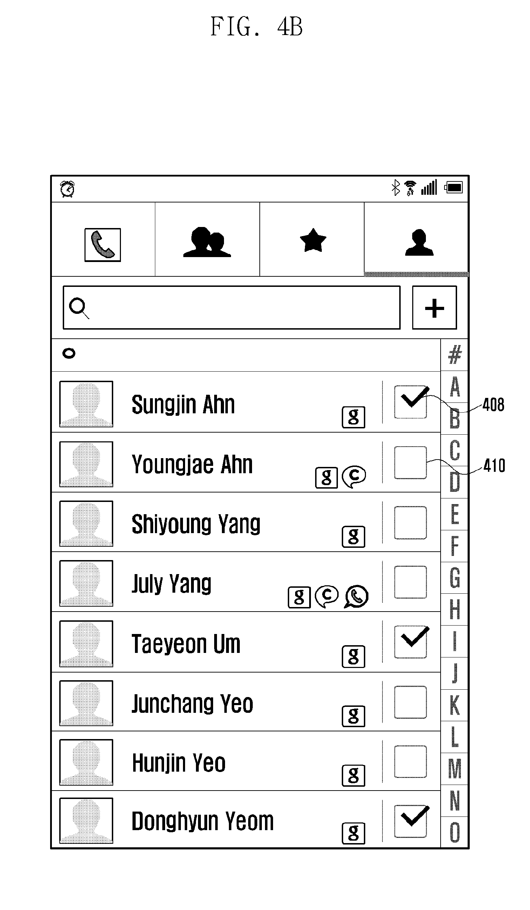

FIGS. 4A and 4B are example drawings illustrating a method for setting contact information to be commonly managed by groups and individuals in an electronic device according to certain embodiments of the present disclosure.

Referring to FIG. 4A, the electronic device manages common contact information by groups according to a user setting. The user sets stored contact information in a specific group. The electronic device identifies sharing of contact information according to an on or off state of a sharing switch 402. A user decides through the sharing switch 402 whether to share contact information or not. The electronic device displays a check box 404 for a sharing setup by groups and makes a check mark 406 corresponding to a user input. The electronic device identifies the check mark 406 in the check box 404 for a sharing setup by groups and shares contact information of the corresponding group with the server. The user generates a separate group to share the contact information of the corresponding group with the server. For example, the user generates 'exception group 1' as a user defined group and identifies a check mark displayed in the check box 407 for a sharing setup of the user defined group to share contact information of the corresponding group with the server. Referring to FIG. 4B, the electronic device sets the common contact information by individuals. The electronic device displays a check box 410 for a sharing setup by individuals and makes a check mark 408 corresponding to a user input. The electronic device identifies a check mark 408 in the check box 410 for a sharing setup by individuals and share contact information of a person with the server. When the check mark 408 doesn't exist in the check box 410 for a sharing setup by individuals, the electronic device may not share the corresponding contact information with the server. FIGS. 4A and 4B illustrate screen examples for setting common contact information to be managed respectively by groups and individuals.

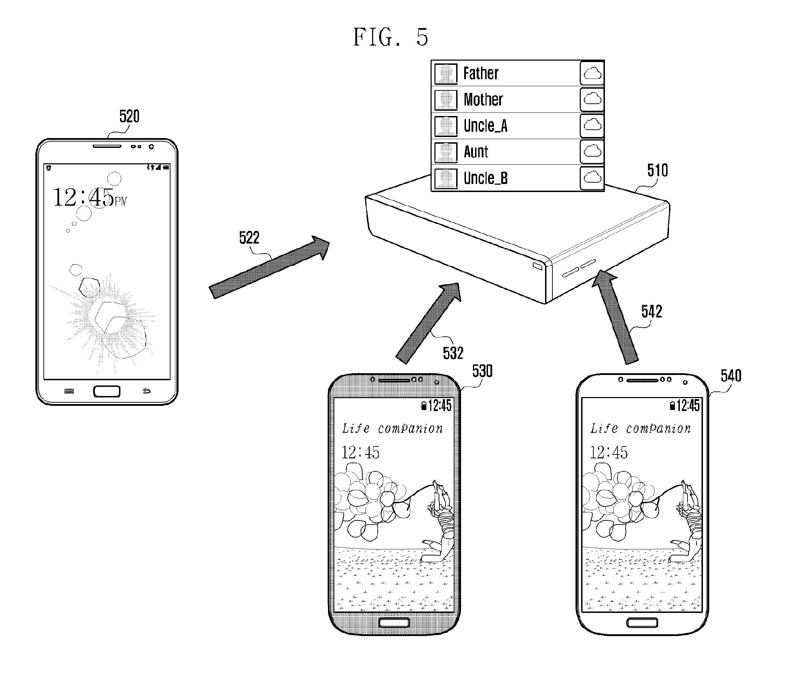

FIG. 5 illustrates a method for registering contact information to be shared in an electronic device according to various embodiments of the present disclosure.

Referring to FIG. 5, a first electronic device 520 set a second electronic device 530 and a third electronic device 540 with which a common phonebook is to be shared though a server 510 according to a user setting. For example, the first electronic device 520 receives user account information input by the user after connecting to the server 510. The first electronic device 520 transmits the user account information to the server 510. At operation 522, the processor 211 of server 510 synchronizes with the first electronic device 520 based on the user account information stored in the memory 220. At operations 532 and 542, the processor 211 of server 510 synchronizes also with the second electronic device 530 and third electronic device 540 based on the user account information received from the second electronic device 530 and third electronic device 540. The user sets the electronic devices to be synchronized for sharing a common phonebook through the server 510 based on the user account information. For example, the first electronic device 520 provides a second synchronization with the second electronic device 530 and third electronic device 540 for sharing a common phonebook according to a user setting. For example, the user of first electronic device 520 selects family electronic devices (such as a second electronic device 530 and third electronic device 540) to provide the second synchronization for sharing a family group in the common phonebook between family members. In certain embodiments, the first electronic device 520 transmits a notice message to the second electronic device 530 and third electronic device 540 in order to get an approval for the second synchronization. When the approvals for second synchronization are received from the second electronic device 530 and third electronic device 540, the first electronic device 520 synchronizes the family group in the common phonebook with the second electronic device 530 and third electronic device 540. Users of each electronic device select electronic devices for the second synchronization based on the user account information.

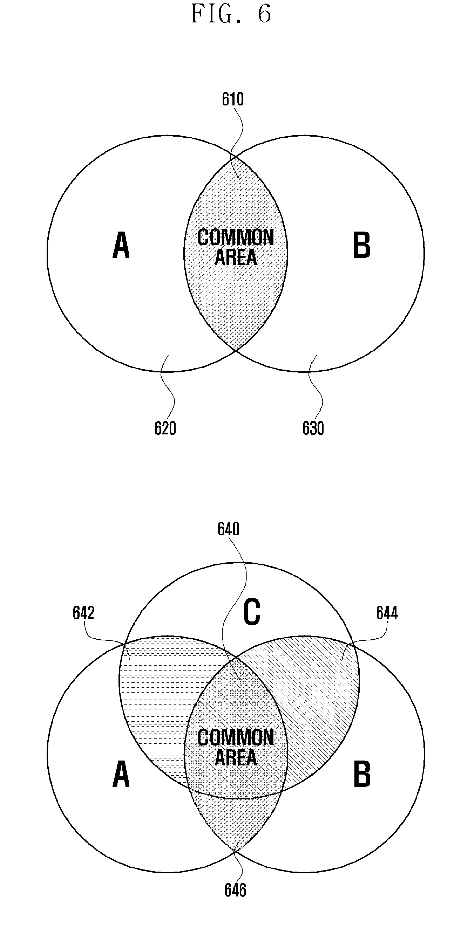

FIG. 6 illustrates a method for dividing a common phonebook of a server into a common area and a non-common area according to various embodiments of the present disclosure.

Referring to FIG. 6, the processor 211 of server 200 receives common phonebooks from synchronized electronic devices and stores them in the server 200. The processor 211 receives common phonebooks of the synchronized electronic devices set by users according to groups and individuals and stores them in the memory 220 of server 200. The processor 211 manages the common phonebook 221 of server 200 by dividing into a common area 610 and non-common areas 620 and 630 based on the contact information stored as the common phonebook 221 of server 200. In certain embodiments, the common area 610 and non-common areas 620 and 630 of the contact information includes user information including at least one of an image, email address, or other information. For example, the processor 211 stores contact information set as a common phonebook by the electronic device A in the common phonebook 221 of the server 200. The processor 211 also stores contact information set as a common phonebook by the electronic device B in the common phonebook 221 of the server 200. The processor 211 manages contact information received from each electronic device (such as an electronic device A and electronic device B) and classifies identical contact information both in the electronic device A and electronic device B as the common area 610 of A and B. The identical contact information both in the electronic device A and electronic device B is classified into the common area 610, and the non-identical contact information is classified into the non-common areas 620 and 630. When storing a common phonebook of electronic device C in the common phonebook of server 200, the processor 211 manages the contact information by dividing into a common area 640 of A, B, and C, common area 642 of A and C, common area 644 of B and C, common area 646 of A and B, and non-common areas of each electronic device. For example, when contact information in the common area 640 of A, B, and C is changed, the processor 211 transmits the changed contact information to the electronic devices A, B, and C. When contact information in the common area 642 of A and C is changed, the processor 211 transmits the changed contact information to the electronic devices A and C. The processor 211 manages an intersection portion between electronic devices as a common area and manages the electronic devices A, B, and C by setting the intersection area of A, B, and C as the most common area. The procedure of generating a common area is performed at the time of synchronizing between electronic devices. For example, the processor 211 of server 200 sets the phonebooks of mother, father, and daughter as a common phonebook, and an acquaintance of mother and father changes contact information and informs the change of the contact information to the father. Accordingly, the father updates his phonebook with the changed contact information. When the father changes the contact information of the acquaintance, the processor 211 of server 200 receives the changed contact information and updates a common phonebook. Because the contact information classified in common areas of mother's and father's phonebooks changed, the processor 211 of server 200 identifies and transmits the corresponding contact information to electronic devices set to share the corresponding contact information. The processor 211 updates the electronic device of mother by transmitting the changed contact information to the electronic device of mother. Accordingly, the processor 211 of server 200 updates the common phonebooks of mother and father without influencing the daughter's phonebook.

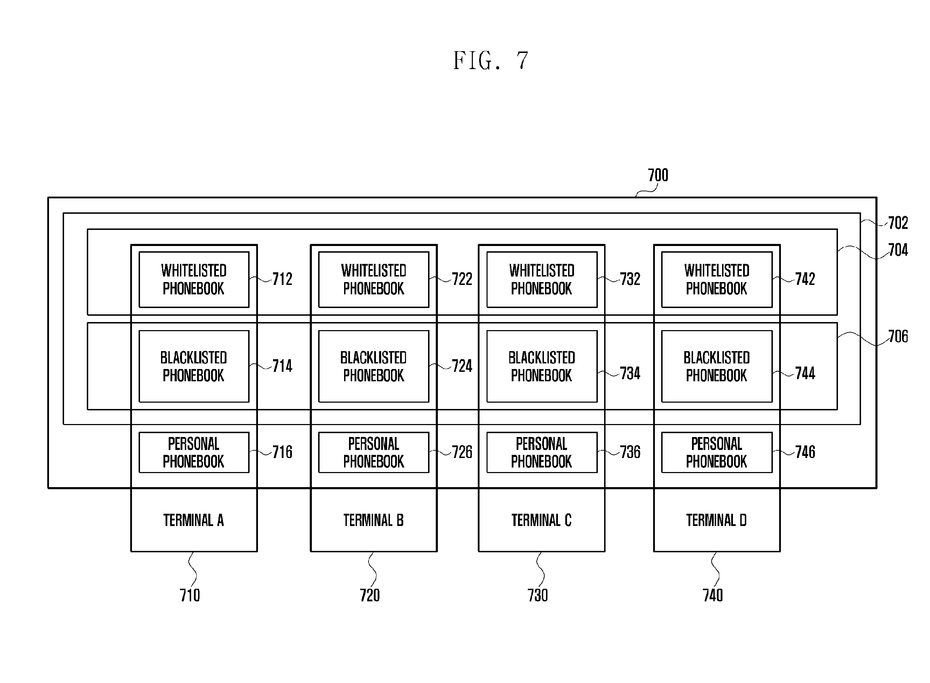

FIG. 7 illustrates a configuration of common phonebook stored in a memory of a server according to certain embodiments of the present disclosure.

Referring to FIG. 7, phone numbers of electronic device A 710 are divided into a whitelisted phonebook 712, blacklisted phonebook 714, and personal phonebook 716 according to a user setting. In certain embodiments, the whitelisted phonebook 712 and the blacklisted phonebook 714 is stored in a memory 700 of server 200 as a common phonebook 702. The common phonebook 702 is shared between electronic devices 710, 720, 730, and 740. In certain embodiments, each electronic device 710, 720, 730, and 740 is in a second synchronization state through the server. The processor 211 of server 200 manages whitelisted phonebooks 712, 722, 732, and 742 of each electronic device by integrating into a whitelisted phonebook 704. The processor 211 manages blacklisted phonebooks 714, 724, 734, and 744 of each electronic device by integrating into a blacklisted phonebook 706. Referring to FIG. 6, the processor 211 manages contact information stored in the common phonebook 702 by dividing into a common area and a non-common area. The processor 211 manages the common phonebook 702 by generating a mapping table in order to efficiently divide into the common area and non-common area. The personal phonebooks 716, 726, 736, and 746 are configured with contact information by excluding the common phonebook 702 from the contact information stored in the memory 700. Further, the user of electronic device A 710 changes the stored contact information to one of the whitelisted phonebook 712, blacklisted phonebook 714, and personal phonebook 716. Responding to this, the processor 211 of server 200 also changes the corresponding contact information to one of the whitelisted phonebook 704, blacklisted phonebook 706, and personal phonebook 716, 726, 736, and 746 of each electronic device.

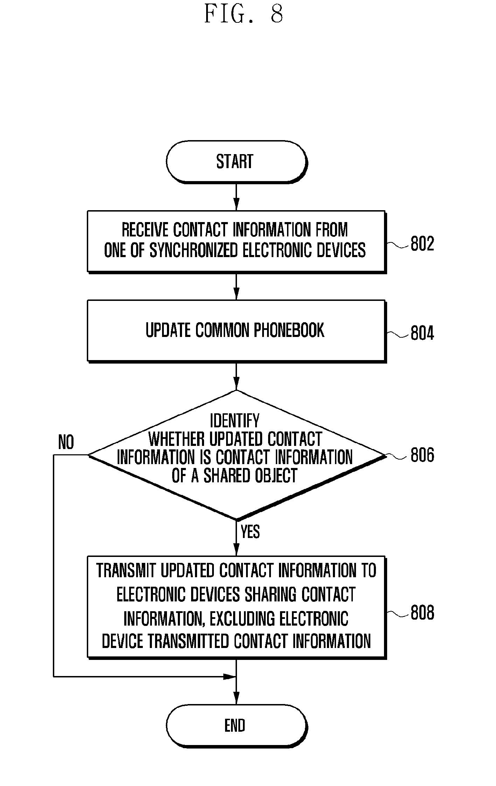

FIG. 8 illustrates a method for managing updated contact information through a server according to certain embodiments of the present disclosure.

In step 802, the processor 211 of server 200 receives contact information from one of the synchronized electronic devices 250. In certain embodiments, the contact information is changed by a user in the electronic device 250. The processor 211 of server 200 receives updated contact information from one of the electronic devices 250 in a first synchronization with the server. In certain embodiments, the update contact information includes at least one of an account, name, image, phone number, email address of contact information, or other information. In step 804, the processor 211 of server 200 updates a common phonebook based on the contact information received from the electronic device 250 in the first synchronization state. The processor 211 of server 200 updates the existing contact information with the contact information. In step 806, the processor 211 of server 200 identifies whether the updated contact information is a sharing object. In certain embodiments, the contact information for sharing is one configured in a common area of the common phonebook. The processor 211 identifies whether the updated contact information is classified into the common area of the common phonebook. When the updated contact information is not a sharing object in step 806, the processor 211 may not transmit the updated contact information to a specific electronic device. In step 808, when the updated contact information is a sharing object in step 806, the processor 211 transmits the updated contact information to electronic devices sharing the contact information excluding the electronic device transmitted the updated contact information. When the updated contact information is a sharing object, the processor 211 transmits the updated contact information to the remaining electronic devices from the synchronized electronic devices by excluding the electronic device transmitted the updated contact information. In certain embodiments, the remaining electronic devices are electronic devices that set the updated contact information as a shared phonebook. When an electronic device 250 comes into a connection environment of the server 200 (such as a location or AP) to transmit or receive contact information between the electronic devices 250, the server 200 transmits a connection request signal to the electronic device 250. In certain embodiments, the connection environment is differently set to each electronic device 250 according to server authorization. The electronic device 250 transmits a connection approval signal to the server 200 responding to the connection request signal. When the connection approval signal is received from the electronic device 250, the processor 211 of server 200 transmits an updated phone number to the corresponding electronic devices 250. In certain embodiments, the server 200 and electronic device 250 become a first synchronization state according to the connection approval signal. The processor 211 transmits the updated contact information to the electronic devices 250 sharing the common area of common phonebook 221. When a sharing approval signal is not received from the corresponding electronic device, the processor 211 cannot transmit the updated contact information to the corresponding electronic device 250.

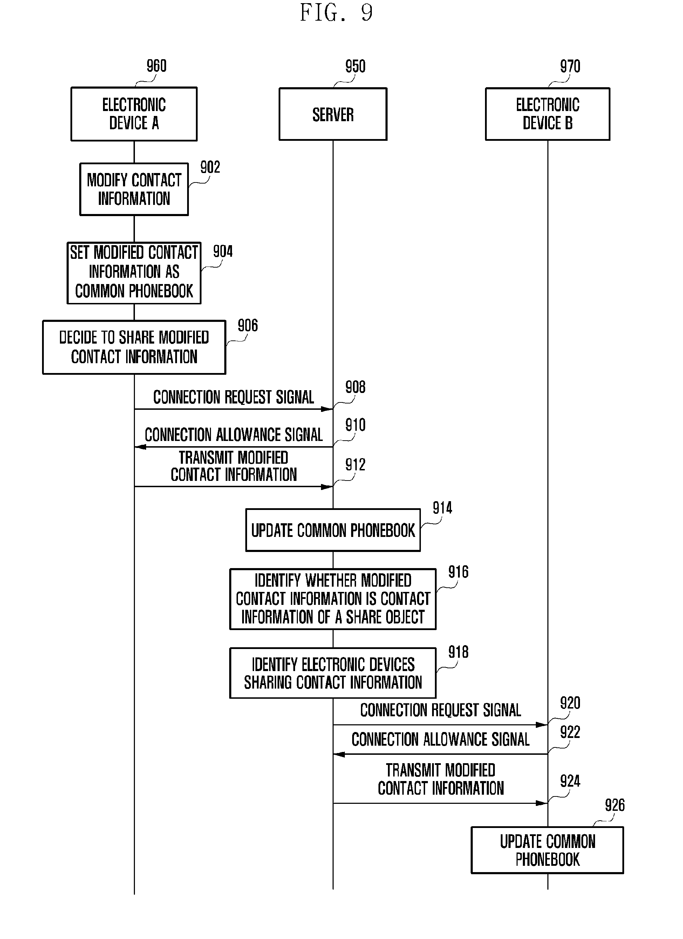

FIG. 9 illustrates a procedure of updating a common phonebook through a server according to certain embodiments of the present disclosure.

Referring to FIG. 9, a processor 211 of server 950 receives modified contact information from an electronic device A 960 and updates a common phonebook of the server 950. The processor 211 then identifies an electronic device sharing the modified contact information and transmits the modified contact information to the corresponding electronic device (such as electronic device B 970).

In step 902, the electronic device A 960 modifies contact information. In step 904, the electronic device A 960 sets the contact information modified by a user as a common phonebook. When the user updates the contact information set as a common phonebook, step 904 is omitted. In step 906, the user decides to share the modified contact information with another electronic device (such as electronic device B). In step 908, the electronic device A 960 transmits a connection request to the server 950. In step 910, the processor 211 of server 950 transmits a connection approval signal to the electronic device A 960 responding to the connection request signal. In step 912, after receiving the connection approval signal from the server at step 910, the electronic device A 960 transmits the modified contact information to the server 950. In step 914, the processor 211 of server 950 updates a common phonebook based on the received contact information received from the electronic device A 960. In step 916, the processor 211 of server 950 identifies whether the modified contact information is a sharing object. The processor 211 of server 950 identifies whether the updated contact information belongs to a common area of the common phonebook. In step 918, the processor 211 of server 950 identifies electronic devices sharing the updated contact information. In order to transmit the updated contact information, the processor 211 of server 950 identifies electronic devices sharing the updated contact information. In step 920, the processor 211 of server 950 transmits a connection request signal to the electronic device B 970 that is one of the electronic devices sharing the updated contact information. In step 922, the electronic device B 970 transmits a connection approval signal to the server 950 responding to the connection request signal. In step 924, after receiving the connection approval signal from the electronic device B 970, the processor 211 of server 950 transmits the modified contact information to the electronic device B 970. In step 926, the electronic device B 970 receives the modified contact information and updates the common phonebook of the electronic device B 970.

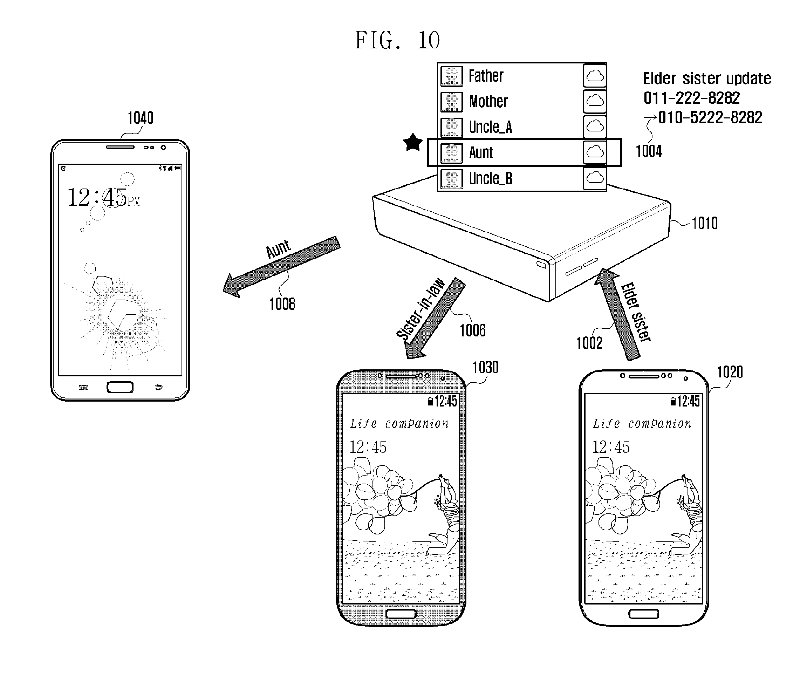

FIG. 10 illustrates a method for updating a common phone book between an electronic device and a server according to various embodiments of the present disclosure.

Referring to FIG. 10, each user differently names an identical phone number stored in a common phonebook. Accordingly, a mapping table is generated as shown in Table 1.

**Table 1**

| Phone number (basic information) | Account | Storage name |
|---|---|---|
| 011-222-8282 | me@samung.com (admin) | Aunt |
| | father@samsung.com | Sister-in-law |
| | mother@smasung.com | Elder sister |

Referring to Table 1, a user of electronic device A 1020 stores a specific phone number in the name of 'Elder sister', a user of electronic device B 1030 stores the phone number in the name of'Sister-in-law', and a user of electronic device C 1040 stores the phone number in the name of'Aunt'. Each electronic device A, B, and C identifies the same phone number as different names and accounts. Accordingly, a server 1010 generates a mapping table not based on the name and account but based on the phone number. The processor of server 1010 identifies an electronic device sharing a changed phone number from the mapping table. For example, the user of electronic device A 1020 modifies the phone number stored in the name of 'Elder sister'. The processor of server 1010 receives the modified phone number of electronic device A 1020 at operation 1002. The processor of server 1010 receives an updated phone number from the synchronized electronic device A 1020. The processor of server 1010 then modifies the mapping table according to the modified phone number at operation 1004. The processor of server 1010 update the existing phone number with the update information. The processor of server 1010 identify electronic device B and C (respectively 1030 and 1040) sharing the phone number based on the mapping table. The processor of server 1010 transmits the modified phone number to the electronic devices B and C at operation 1006 and 1008. Accordingly, by receiving the modified phone number, the electronic device B 1030 modify the phone number stored in the name of 'Sister-in-law' and the electronic device C 1040 modify the phone number stored in the name of 'Aunt'. The processor of server 1010 transmit the updated contact information to the remaining electronic devices B and C (respectively 1030 and 1040) excluding the electronic device A 1020 which transmitted the updated contact information. In certain embodiments, the electronic devices B and C are sharing the update information with the electronic device A 1020. The server 1010 transmits the update information to the electronic devices A and B which shares the contact information.

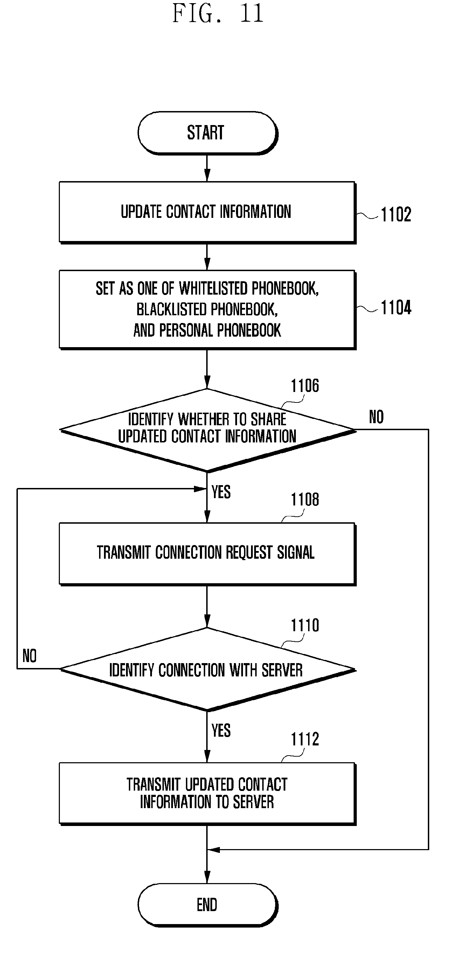

FIG. 11 illustrates a method for transmitting contact information from an electronic device to a server according certain embodiments of the present disclosure.

In step 1102, a processor 261 of electronic device 250 updates contact information stored in the memory 270 of electronic device 250. The processor 261 of electronic device 250 updates the existing phonebook of electronic device 250 when a user adds new contact information or modifies the existing contact information. In step 1104, the processor 261 of electronic device 250 sets the contact information updated by a user input as one of a whitelisted phonebook 274, blacklisted phonebook 276, and personal phonebook 272. In step 1106, the processor 261 of electronic device 250 identifies whether to share the updated contact information. When a user decides to share the updated contact information through a sharing switch 402, sharing setup check box 404, and sharing setup check box by individual person 408 of FIGS. 4A and 4B, the processor 261 of electronic device 250 identifies the sharing of updated contact information through the above elements 402, 404, and 408. When the updated contact information is decided not to share at step 1106, the processor 261 of electronic device 250 doesn't transmit the updated contact information to the server 200. In step 1108, when the updated contact information is decided to share at step 1106, the processor 261 of electronic device 250 transmits a connection request signal to the server 200. In step 1110, the connection request signal is continuously transmitted to the server 200 until the connection is identified. In certain embodiments, the connection between the electronic device 250 and server 200 is enabled when the electronic device 250 synchronized according to a user account comes into a connection environment of the server 200. In step 1112, when the connection with the server 200 is identified by the processor 261 of electronic device 250 at step 1110, the processor 261 of electronic device 250 transmits the updated contact information to the server 200.

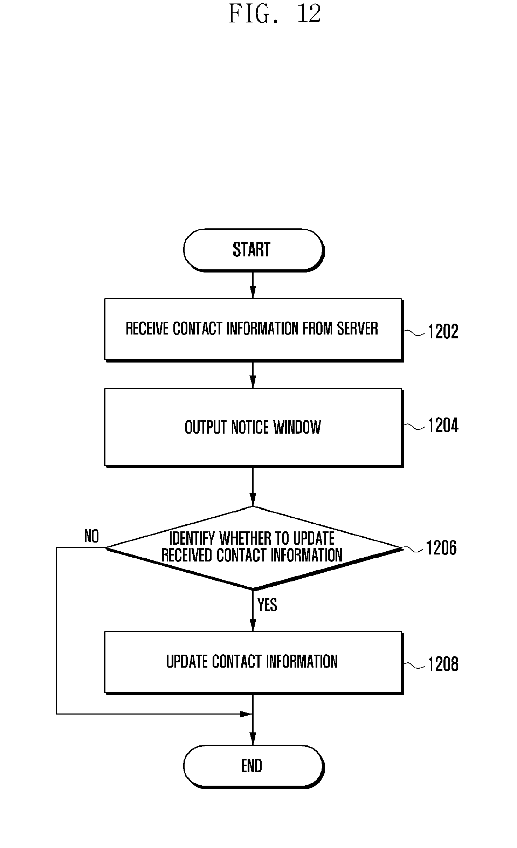

FIG. 12 illustrates a method for updating contact information received from a server in an electronic device according to various embodiments of the present disclosure.

In step 1202, the processor 261 of electronic device 250 receives contact information (such as update information) from the server 200. The processor 211 server 200 transmits the contact information to the electronic device 250 when the electronic device 250 comes into a connection environment of the server 200 (such as when a location and AP information is identified). In certain embodiments, the server 200 transmits the contact information as a sharing object to the electronic device 250, and the electronic device 250 accordingly receives the sharing object from the server 200. In operation 1204, the processor 261 of electronic device 250 outputs a notice window related to the update of contact information to a display unit 290, and a user decides the update of contact information through the notice window. For example, the processor 261 output selection buttons for operation such as an 'Accept after confirmation', 'Accept all', and 'Confirm later' to the notice window, and perform the operation according to a user input. When the user decides not to update the received contact information at step 1206, the processor 261 of electronic device 250 doesn't update the received contact information. In step 1208, when the user decides to update the received contact information at step 1206, the processor 261 of electronic device 250 updates with the received contact information. When an automatic update is set by the user, the processor 261 of electronic device 250 omits the steps 1204 and 1206. When an automatic update is set by the user, the processor 261 automatically updates the received contact information without outputting a notice window and deciding the update.

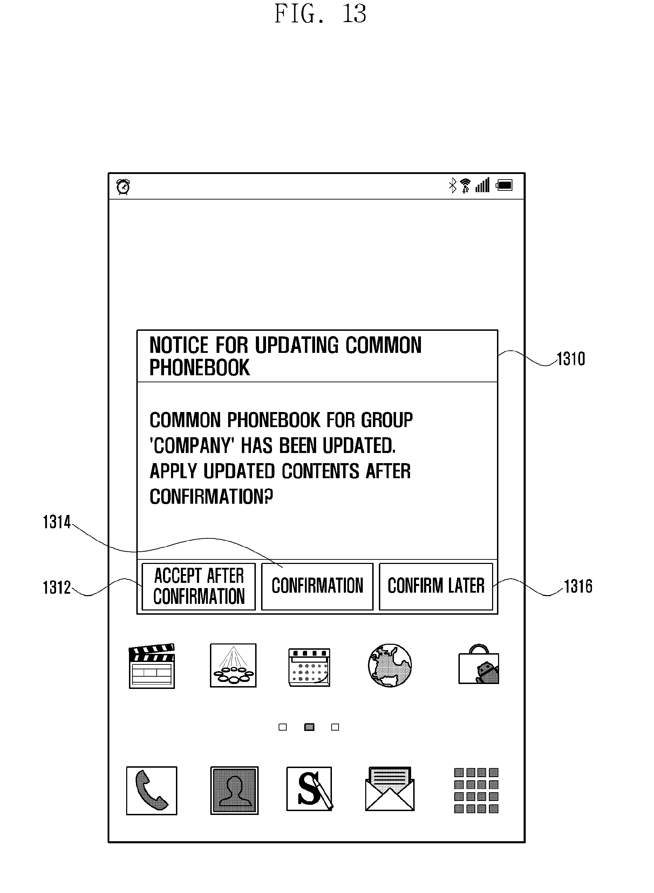

FIG. 13 illustrates a notice window being output while updating contact information in an electronic device according to various embodiments of the present disclosure.

Referring to FIG. 13, the processor 261 of electronic device 250 outputs an update notice window 1310 through a display unit of the electronic device 250 when update contact information is received. The processor 261 displays selection buttons such as an 'Accept after confirmation' 1312, 'Accept all' 1314, and 'Confirm later' 1316 in the update notice window 1310 so that at least one operation is performed. Subsequently, the processor 261 performs a corresponding operation by detecting a user input for selecting the button. The user decides the update by selecting a button displayed in the update notice window. The processor 261 of electronic device 250 detects a user input and performs a corresponding operation. When an automatic update is set for the update contact information, the processor 261 of electronic device 250 omits the output of notice window 1310.

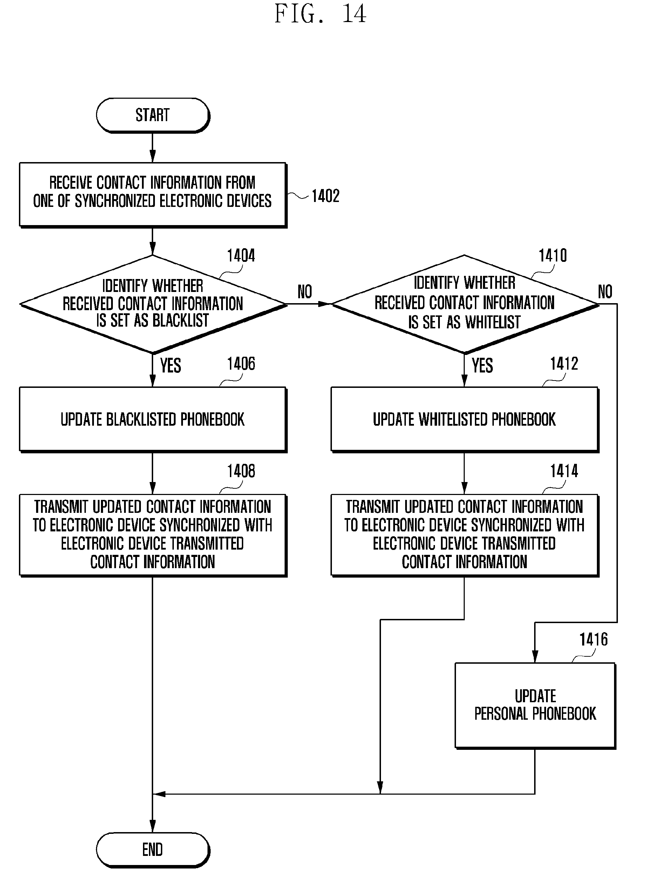

FIG. 14 illustrates a method for managing a blacklisted phonebook through a server in an electronic device according to various embodiments of the present disclosure.

In step 1402, the processor 211 of server 200 receives contact information from one of synchronized electronic devices 250. When the electronic device 250 comes in to a connection environment of the server 200 and the electronic device 250 is connected to the server 200, the processor 211 of server 200 receives contact information form the corresponding electronic device 250. In step 1404, the processor 211 of server 200 identifies whether the received contact information is set in a blacklist by a user. In step 1406, when the contact information is set in the blacklist, the processor 211 of server 200 updates a blacklisted phonebook. In step 1408, the processor 211 of server 200 transmits updated contact information to electronic devices synchronized with the electronic device 250 which transmitted the updated contact information. The processor 211 receives the contact information set in the blacklist, identifies electronic devices synchronized with the electronic device 250 that transmitted the contact information, and transmits the contact information to the corresponding electronic devices. In step 1410, when the received contact information is not set in the blacklist at step 1404, the processor 211 identifies whether the contact information is set in a whitelist. In step 1412, when the contact information is set in the whitelist, the processor 211 of server 200 updates a whitelisted phonebook. In step 1414, the processor 211 transmits the updated contact information to electronic devices synchronized with the electronic device 250 that transmitted the contact information. The processor 211 receives contact information set in the whitelist, identifies electronic devices synchronized with the electronic device 250 which transmitted the contact information, and transmits the contact information to the corresponding electronic devices. In step 1416, when the received contact information is not set in the whitelist at step 1410, the processor 211 updates a personal phonebook.

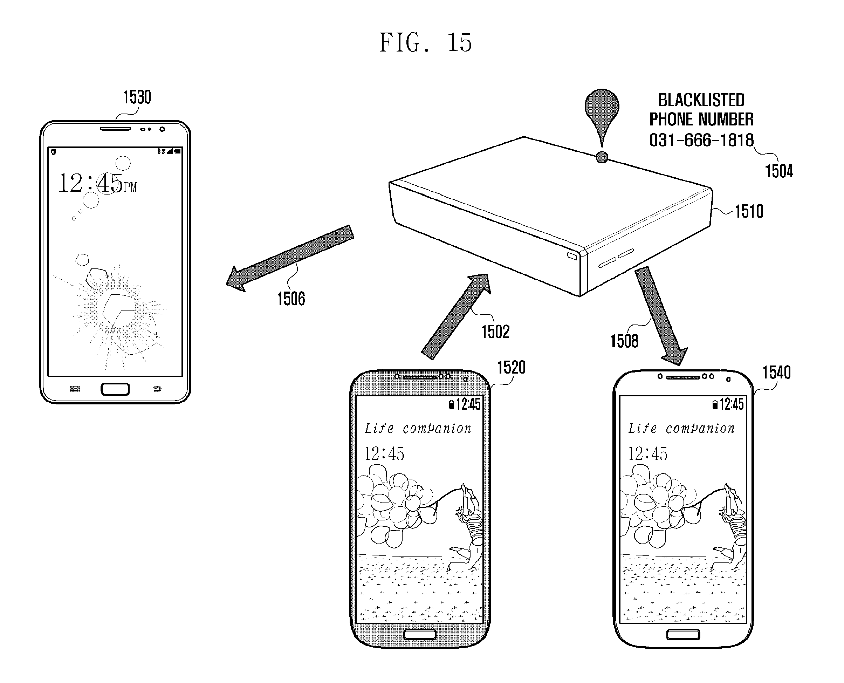

FIG. 15 illustrates a method for updating a blacklisted phonebook between an electronic device and a server according to various embodiments of the present disclosure.

Referring to FIG. 15, a user of electronic device A 1520 sets a spam phone number in a blacklist. At operation 1502, a processor 211 of server 1510 receives a spam phone number set in a blacklist when the electronic device A 1520 is connected. In certain embodiments, the connection between the server 1510 and electronic device A 1520 is identified through a user account when the electronic device A 1520 comes into a connection environment of the server 1510. When the processor 211 of server 1510 identifies that the electronic device A 1520 came into the connection environment of the server 1510 (such as when location and AP information is identified), the server 1510 receives a spam phone number from the electronic device A 1520. At operation 1504, the processor 211 of server 1510 updates a blacklisted phonebook 226 based on the received spam phone number. After updating the blacklisted phonebook at operation 1504, the processor 211 identifies electronic devices 16530 and 1540 synchronized with the electronic device A 1520, and transmits the blacklisted phonebook to the electronic devices 1530 and 1540. In certain embodiments, the electronic devices 1530 and 1540 are electronic devices sharing the common phonebook by synchronizing with the electronic device A 1520 through the server 1510 in a second synchronization state.

An electronic device according to various embodiments of the present disclosure share contact information stored in a memory with other electronic devices through a server. Because the electronic device shares the contact information set in a common phonebook with other electronic device through the server, a user efficiently manages the contact information set as a common phonebook. The electronic device shares not only the contact information set as a common phonebook but also contact information set as a quiescent list like a spam phone number with other electronic devices. For example, when the contact information set in a common phonebook is changed, the electronic device update common phonebooks of other electronic devices in a lump through the server. Accordingly, a user conveniently manages the contact information set in a common phonebook through a server without direct inputting or storing.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for managing contact information in an electronic device, the method comprising:
receiving update information of contact information from one of a plurality of electronic devices connected to the electronic device;
updating the contact information based on the received update information;
identifying an electronic device that set the updated contact information as a shared object; and
transmitting at least one portion of the update information to the electronic device that set the contact information as a shared object.

2. The method of claim 1, wherein the update information comprises at least one of an account, name, image, phone number, email address, or other information.

3. The method of claim 1, wherein identifying an electronic device that set the updated contact information as a shared object comprises:
identifying common contact information between the electronic devices; and
identifying an electronic device that set the common contact information as a shared object for the electronic devices.

4. The method of claim 3, wherein identifying common contact information comprises:
receiving contact information from electronic devices connected to the electronic device; and
deciding that the contact information is common contact information when identical contact information is received from more than one electronic device among the electronic devices.

5. The method of claim 1, wherein identifying an electronic device that set the updated contact information as a shared object is performed by identifying an electronic device to which the update information is transmitted based on a contact information mapping table between the electronic device and connected electronic devices.

6. The method of claim 1, wherein updating the contact information comprises:
identifying whether the contact information is set in a quiescent list; and
updating the contact information with the quiescent list when the contact information is set in the quiescent list.

7. The method of claim 6, wherein identifying whether the contact information is set in a quiescent list is performed according to a quiescent list automatically set by comparing data between the electronic devices at the time of connecting the contact information between the electronic devices.

8. The method of claim 6, wherein identifying whether the contact information is set in a quiescent list comprises:
identifying with contact information of the quiescent list or with a specific sentence in a text base.

9. The method of claim 1, further comprising:
receiving update information related to the contact information from the electronic device;
identifying whether the contact information is a shared object;
outputting a update notice window of the contact information in a display when the contact information is a shared object; and
updating the contact information based on an user input in the notice window.

10. The method of claim 1, wherein receiving update information comprises:
receiving the update information by identifying whether an electronic device connectible to the electronic device came into a connection environment of the electronic device.

11. The method of claim 9, further comprising:
identifying whether an automatic update is set when the contact information is a shared object; and
updating the contact information with the update information when the automatic update is set.

12. An electronic device for managing contact information, the electronic device comprising:
a communication module configured to transmit update information of contact information to connected electronic devices;
a memory configured to store the contact information; and
at least one processor configured to:
receive update information of contact information from one of a plurality of electronic devices connected to the electronic device;
update the contact information based on the received update information;
to identify an electronic device that set the updated contact information as a shared object; and
transmit the update information to the electronic device that set the contact information as a shared object.

13. The electronic device of claim 12, wherein the processor is further configured to:
identify common contact information between the electronic devices; and
identify an electronic device that set the common contact information as a shared objet for the electronic devices.

14. The electronic device of claim 13, wherein the processor is further configured to:
receive contact information from a connected electronic devices; and
decide that the contact information is common contact information between the electronic devices when identical contact information is received from more than one electronic device among the electronic devices.

15. The electronic device of claim 12, wherein the processor is further configured to:
receive the contact information from one of the connected electronic devices;
identify whether the contact information is set in a quiescent list set by a user; and
update the quiescent list when the contact information is set in the quiescent list.
